# EUROPEAN PATENT APPLICATION

(11) **EP 3 796 205 A1**
(43) Date of publication of application: **24.03.2021**
(21) Application number: 20190464.6
(22) Date of filing: 11.08.2020
(51) Int. Cl.: G06K 7/10

(54) **SYMBOL READING DEVICE AND NON-TRANSITORY COMPUTER-READABLE STORAGE MEDIUM**

(30) Priority: 18.09.2019 JP 2019169823
(71) Applicant: Toshiba TEC Kabushiki Kaisha, Tokyo 141-8562 (JP)
(72) Inventor: Naito, Hidehiro, Tokyo, 141-8562 (JP)
(74) Representative: Hoffmann Eitle

(57) **Abstract**

According to one or more embodiments, a symbol reading device comprises a plurality of imaging units and a processor. The plurality of imaging units are disposed at a plurality of positions to image an article, and each imaging unit comprises a light emitter configured to emit light towards the article. An interfering subset of the plurality of imaging units are at mutually interfering positions at which light emission from imaging units of the subset degrades imaging performance of the other imaging units in the subset. The processor configured to control the interfering subset such that a timing for image capture by at least one of the interfering subset differs from timings of light emission by the others of the rest of the interfering subset.

## Description

This application is based upon and claims the benefit of priority from Japanese Patent Application No. 2019-169823, filed on September 18, 2019, the entire contents of which are incorporated herein by reference.

### FIELD

Embodiments described herein relate generally to a symbol reading device and a non-transitory computer readable medium storing a symbol reading program.

### BACKGROUND

In recent years, when loading or unloading articles at a factory or a warehouse, or when selling a commodity at a store, a symbol that has been attached to the article/commodity may be read with an imaging unit while the article is being transported or handled.

In such a case, a symbol, such as a barcode or a two dimensional code, can be attached to the article itself or perhaps a container or the like in which the article is stored. Such a symbol may be directly printed on the article/commodity (or its container) or may be affixed thereto as a label. Light from the imaging unit, or otherwise, can be used to capture an image of the symbol or optically read the symbol on the article while it is being moved or conveyed. For example, the symbol is captured or optically read by a camera.

When transporting an article, a symbol reading device is arranged in such a manner that a plurality of imaging units for reading respective surfaces of the article are arranged to face the respective surfaces (for example, imaging units may be arrayed in a ring shape) on an upper side, a lower side, both left and right sides, and the like of the article on a transport path so that the symbol can be read at least one of the imaging units regardless of location on the article of the symbol during the transportation.

However, depending on the positions of the imaging units one imaging unit may directly receive light emitted from an opposing imaging units, causing functions thereof to degrade.

### SUMMARY OF THE INVENTION

One of the objects of the present invention is to improve prior art techniques and overcome at least some of the prior art problems as for instance above illustrated.

According to a first aspect of the present invention, it is provided a symbol reading device, comprising: a plurality of imaging units disposed at a plurality of positions to image an article, each imaging unit comprising a light emitter configured to emit light towards the article, an interfering subset of the plurality of imaging units being at mutually interfering positions at which light emission from imaging units of the subset degrades imaging performance of the other imaging units in the subset; and a processor configured to control the interfering subset such that a timing for image capture by at least one of the interfering subset differs from timings of light emission by the others of the rest of the interfering subset.

Optionally, in the symbol reading device according to the first aspect of the invention, the processor is further configured to control the plurality of imaging units to emit light one by one in order.

Optionally, in the symbol reading device according to the first aspect of the invention, the processor is further configured to control the plurality of imaging units to emit light one by one at predetermined intervals.

Optionally, the symbol reading device according to the first aspect of the invention further comprises a memory configured to store an order table defining a predetermined order of the light emission timings of the imaging units.

Optionally, in the symbol reading device according to the first aspect of the invention, the processor is further configured to control the interfering subset and non-interfering subset of the plurality of imaging units to simultaneously emit light.

Optionally, in the symbol reading device according to the first aspect of the invention, the imaging units of the non-interfering subset are at non-light interfering positions.

Optionally, in the symbol reading device according to the first aspect of the invention, the processor is further configured to: control pairs of the interfering subset and the non-interfering subset to simultaneously emit light such that the light emission of the respective pairs is in a sequence order.

Optionally, in the symbol reading device according to the first aspect of the invention, the processor is further configured to control the light emitters of the others of the rest of the interfering subset to emit light immediately after completion of the image capture by the at least one of the interfering subset.

Optionally, in the symbol reading device according to the first aspect of the invention, the processor is further configured to control the light emitters of the imaging units to emit light for a predetermined period of time and control the imaging units to be active for the same predetermined period of time.

According to a second aspect of the invention, it is provided a non-transitory computer-readable medium storing a program therein, which when executed, causes a computer to perform a process for capturing an image of a symbol attached to an article upon light emission from a plurality of imaging units of a symbol reading device, the process comprising: controlling an interfering subset of the plurality of imaging units, which are at mutually interfering positions at which light emission from imaging units of the subset degrades imaging performance of the other imaging units in the subset, such that a timing for image capture by at least one of the interfering subset differs from timings of light emission by the others of the rest of the interfering subset.

Optionally, in the non-transitory computer-readable medium according to the second aspect of the invention, the process further comprises controlling the plurality of imaging units to emit light one by one in order.

Optionally, in the non-transitory computer-readable medium according to the second aspect of the invention, the process further comprises controlling the plurality of imaging units to emit light one by one at predetermined intervals.

Optionally, in the non-transitory computer-readable medium according to the second aspect of the invention, the process further comprises controlling the light emission of the plurality of imaging units based on a predetermined order defined in an order table.

Optionally, in the non-transitory computer-readable medium according to the second aspect of the invention, the process further comprises controlling the interfering subset and non-interfering subset of the plurality of imaging units to simultaneously emit light.

Optionally, in the non-transitory computer-readable medium according to the second aspect of the invention, the process further comprises controlling pairs of the interfering subset and the non-interfering subset to simultaneously emit light such that the light emission of the respective pairs is in a sequence order.

Optionally, in the non-transitory computer-readable medium according to the second aspect of the invention, the process further comprises controlling the light emitters of the others of the rest of the interfering subset to emit light immediately after completion of the image capture by the at least one of the interfering subset.

Optionally, in the non-transitory computer-readable medium according to the second aspect of the invention, the process further comprises controlling the light emitters of the imaging units to emit light for a predetermined period of time and control the imaging units to be active for the same predetermined period of time.

According to a third aspect of the invention, it is provided a symbol reading device, comprising: a plurality of imaging units disposed at a plurality of positions to image an article, each imaging unit comprising a light emitter configured to emit light towards the article, an interfering subset of the plurality of imaging units being at mutually interfering positions at which light emission from imaging units of the subset degrades imaging performance of the other imaging units in the subset; and a processor configured to: control the interfering subset such that a timing of image capture by at least one of the interfering subset differ from timings of light emission by the others of the rest of the interfering subset; and control the at least one of the interfering subset and non-interfering subset to simultaneously emit light.

Optionally, in the symbol reading device according to the third aspect of the invention, the processor is further configured to control the plurality of imaging units to emit light one by one at predetermined intervals and in a predetermined order.

Optionally, in the symbol reading device according to the third aspect of the invention, the processor is further configured to control pairs of the interfering subset and the non-interfering subset to simultaneously emit light such that the light emission of the respective pairs is in a sequence order.

### BRIEF DESCRIPTION OF THE DRAWINGS

FIG. 1 depicts a symbol reading device according to a first embodiment.
FIG. 2 depicts an example of on/off operations of cameras according to an embodiment.
FIG. 3 depicts a hardware configuration of a symbol reading device according to an embodiment.
FIG 4 depicts a functional configuration of a symbol reading device according to an embodiment.
FIG. 5 is a flowchart of a control process performed by a symbol reading device according to an embodiment.
FIG. 6 is a timing chart of light emission and camera activation time according to an embodiment.
FIG. 7 depicts a symbol reading device according to a second embodiment.
FIG. 8 depicts an example of on/off operations of cameras according to an embodiment.

### DETAILED DESCRIPTION

According to one or more embodiments, a symbol reading device comprises a plurality of imaging units and a processor. The plurality of imaging units are disposed at a plurality of positions to image an article, and each imaging unit comprises a light emitter configured to emit light towards the article. An interfering subset of the plurality of imaging units are at mutually interfering positions at which light emission from imaging units of the subset degrades imaging performance of the other imaging units in the subset. The processor configured to control the interfering subset such that a timing for image capture by at least one of the interfering subset differs from timings of light emission by the others of the rest of the interfering subset.

Hereinafter, example embodiments of a symbol reading device will be described with reference to the drawings. It should be noted that the present disclosure is not limited to the example embodiments described below.

### First Embodiment

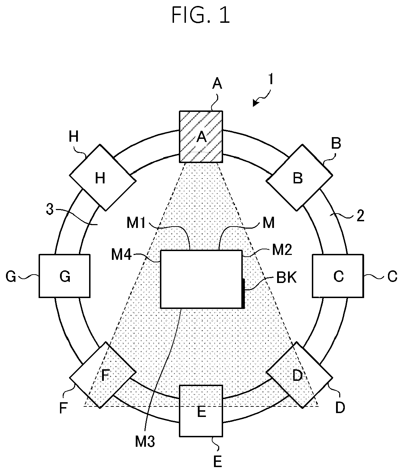

First, a symbol reading device 1 according to the first embodiment will be described with reference to FIG. 1. FIG. 1 is an explanatory diagram illustrating the symbol reading device 1 according to the first embodiment. The symbol reading device 1 is configured to capture and read a symbol BK, such as a barcode or a two-dimensional code, attached to an article by a plurality of cameras. In the first embodiment, the symbol BK is attached to a commodity M.

As shown in FIG. 1, the symbol reading device 1 comprises a ring-shaped support member 2 and a plurality of cameras. The support member 2 has a hollow portion 3 in the ring shape. The plurality of cameras (as an example of a plurality of imaging units or image capturing units) are disposed on the support member 2. In the first embodiment, eight cameras A to H are provided. The commodity M is transported through the hollow portion 3. In FIG. 1, the commodity M is transported from a front side toward a back side. The commodity M is transported by a belt conveyor. In another embodiment, the commodity M may be manually transported by an operator of the device with his or her hand. In each of the cameras A to H, a lens for imaging or capturing an image of the symbol BK is directed toward the hollow portion 3. The symbol reading device 1 receives and then reads the image of the symbol BK captured by a camera. The cameras A to H are arranged on the support member 2 at intervals (for example, at equal intervals) on a plane orthogonal to the transport direction of the commodity M.

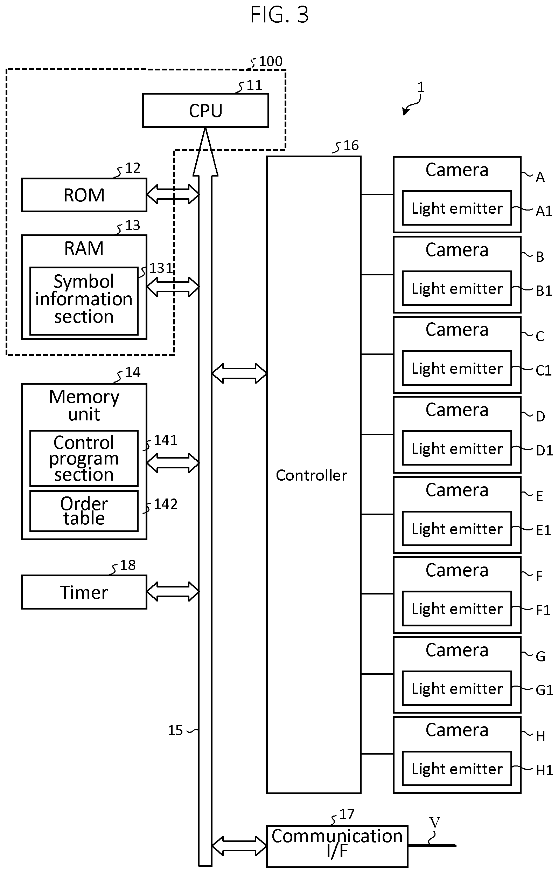

The cameras A to H comprises light emitters A1 to H1 (see FIG. 3), respectively. Each of the light emitters A1 to H1 emits light toward the hollow portion 3 and thus irradiates the commodity M being transported through the hollow portion 3 and the attached symbol BK. The light emitters A1 to H1 are, for example, light emitting diodes (LEDs).

In FIG. 1, the light emitted by the light emitter A1 of the camera A may spread and reach the cameras D, E, and F arranged at positions facing the camera A. In general, the light emitted from the light emitter D1 of the camera D, the light emitted from the light emitter E1 of the camera E, and the light emitted from the light emitter F1 of the camera F may also reach the camera A. Hence, the cameras A, D, E, and F may be referred to in this context as interfering imaging units or imaging units that interfere with each other. That is, this subset of cameras are disposed at positions at which they may interfere with each other. On the other hand, the light emitted from the light emitter A1 does not reach the cameras B, C, G, and H. Since the cameras A, B, C, G, and H are not disposed at positions that interfere with each other, these cameras are not the interfering imaging units with respect to each other. In other words, the camera A is an interfering imaging unit for the cameras D, E, and F but is not an interfering imaging unit for the cameras B, C, G, and H.

When the cameras A, D, E, and F, which are the interfering imaging units to each other, simultaneously attempt to capture an image of the commodity M, they may directly receive the light emitted from the other light emitters so that the function of the cameras may deteriorate, and thus an image of the commodity M may not be properly captured. In other words, these cameras constitute an interfering subset of the plurality of imaging units which are disposed at mutually interfering positions at which the light emission from one or more imaging units in the subset degrades imaging performance of the other imaging units in the same subset. In order to prevent such a situation, in the first embodiment, the light emitters of the cameras A to H are set sequentially emit light in a time-division manner. Furthermore, when the light emitter of one of the cameras emits light, only that camera is allowed to capture an image of the symbol BK attached to the commodity M. For example, first, the light emitter A1 emits light for a predetermined period of time, and only the camera A attempts to capture an image of the symbol BK during that time. Subsequently, for example, the light emitter E1 emits light for a predetermined time period, and only the camera E attempts to capture an image of the symbol BK. In this way, the light emitters of the respective cameras sequentially emit light, and the symbol BK attached to the commodity M is captured only by the camera with the light emitter thereof actively emitting light.

By capturing images of the commodity M by the cameras A to H as described above, the symbol BK attached to the commodity M can be properly imaged by one or more cameras. For example, the cameras H, A, and B can capture an image of an upper surface M1 of the commodity M. The cameras B, C, and D can capture an image of a side surface M2, that is a right surface, of the commodity M. The camera D, the camera E, and the camera F can capture an image of a lower surface M3 of the commodity M. The camera F, the camera G, and the camera H can capture a side surface M4 , that is a left surface, on the opposite side to the side surface M2 of the commodity M. In the example of FIG. 1, since the symbol BK is attached to the right-side surface M2 of the commodity M, the cameras B, C, and D capture an image of the symbol BK together with the commodity M.

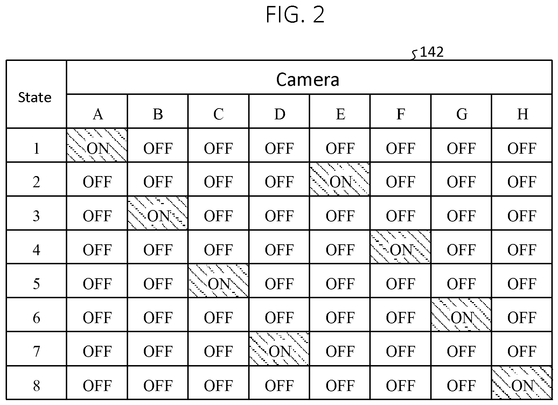

In the first embodiment, the light emitters of the cameras A to H sequentially emit light in a time-division manner in an order defined by an order table 142 illustrated in FIG. 2. Also, the cameras A to H attempt to capture images only for a time period during which the respective light emitters emit light to read the symbol BK attached to the commodity M. Note that, in some examples, the light emission time of each of the light emitters may be somewhat longer than the camera exposure time (the time during which the camera is actively attempting to acquire an image) of each of the cameras.

As shown in FIG. 2, first, at State 1, the light emitter A1 of the camera A is allowed to emit light for a predetermined time duration, and the camera A is active for the same time duration to capture an image of the commodity M. When State 1 ends, the light emission of the light emitter A1 and the exposure of the camera A are terminated, and State 2 is initiated, that is, the light emitter E1 of the camera E is allowed to emit light for a predetermined time duration, the camera E is activated for the same time duration, and an image of the commodity M is captured. The rest proceeds in a similar manner. In this way, the cameras A, E, B, F, C, G, D, and H perform light emission and exposure in the order as defined in the table 142.

In the first embodiment, the camera E, instead of the camera B, performs the light emission and exposure following the camera A because if the symbol BK cannot be read by the camera A, there is a possibility that the symbol BK is attached to a surface other than the upper surface M1 and it is desirable to drive the camera E capable of imaging another surface of the commodity M since the camera B is merely capable of capturing an image of the same surface as the camera A in the present embodiment.

The hardware configuration of the symbol reading device 1 will now be described with reference to FIG. 3. FIG. 3 is a block diagram illustrating the hardware configuration of the symbol reading device 1. As shown in FIG. 3, the symbol reading device 1 comprises a central processing unit (CPU) 11, a read only memory (ROM) 12, a random-access memory (RAM) 13, a memory unit 14, and the like. The CPU 11 (or a processor) serves as a control entity. The ROM 12 stores various programs. The RAM 13 develops programs and various kinds of data. The memory unit 14 stores various programs. The CPU 11, the ROM 12, the RAM 13, and the memory unit 14 are connected to each other via a bus 15. The CPU 11, the ROM 12, and the RAM 13 constitute a control unit 100. The control unit 100 executes control processing and/or functions of the symbol reading device 1 by the CPU 11 operating in accordance with a control program stored in the ROM 12 or the memory unit 14 and loaded in the RAM 13.

The RAM 13 includes a symbol information section 131. The symbol information section 131 stores specific information related to the symbol BK captured by the cameras A to H. The specific information related to the symbol BK is, for example, code information obtained by reading the symbol BK and image information of the symbol BK.

The memory unit 14 may be a solid-state drive (SSD), a hard disc drive (HDD), a flash memory, and the like, and it maintains storage contents even when power supply is cut off. The memory unit 14 includes a control program section 141 and the order table 142. The control program section 141 stores a control program for controlling the symbol reading device 1. As illustrated in FIG. 2, in the order table 142, an order in which the light emitters emit light and an order in which the cameras are activated are predetermined from State 1 to State 8.

The control unit 100 is connected to the cameras A to H via the bus 15 and a controller 16. The controller 16 directly controls the cameras A to H to read the commodity M. Further, the cameras A to H include the light emitters A1 to H1, respectively.

The control unit 100 is connected to a communication I/F 17 via the bus 15. The communication I/F 17 connects to another device via a connection line V and transmits and receives information to and from each other. In addition, the control unit 100 connects to a timer 18 via the bus 15. The timer 18 measures time.

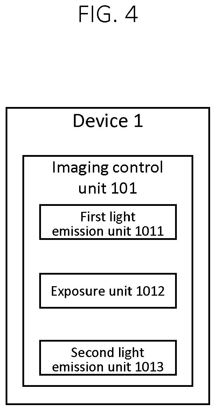

Hereinafter, a functional configuration of the symbol reading device 1 will be described with reference to FIG. 4. FIG. 4 is a functional block diagram illustrating the functional configuration of the symbol reading device 1 according to the first embodiment. In this embodiment, the symbol reading device 1 incorporates an imaging control unit 101 which functions in accordance with a control program stored in the ROM 12 and/or the control program section 141, which is loaded in the RAM 13 for execution.

The imaging control unit 101 controls a plurality of interfering imaging units, among the plurality of the imaging units, arranged at mutually interfering positions at which light from one or more imaging units interfere with another imaging unit (or units) such that a timing for image capture by at least one of the interfering imaging units differ from a timing of light emission by the other of the interfering imaging units. For example, the imaging control unit 101 causes the cameras A to H and the light emitters A1 to H1 to operate one by one in the order defined in the order table 142, thereby making the timings of image capturing attempts by different cameras to be different from the timings of light emission among other ones in the plurality of interfering imaging units.

In the first embodiment, the imaging control unit 101 functions as a first light emission unit 1011, an exposure unit 1012, and a second light emission unit 1013 when the control program is executed by the CPU 11 of the control unit 100.

The first light emission unit 1011 causes the light emitters A1 to H1 to emit light one by one at predetermined intervals in a sequence. For example, the first light emission unit 1011 causes the light emitters A1 to H1 to emit light one after the others at predetermined intervals according to the sequence order of the light emitters A1 to H1 as stored in the order table 142 (see FIG. 2).

The exposure unit 1012 causes the cameras to be activated in synchronization with the light emission of the light emitters as controlled by the first light emission unit 1011 and captures an image of the commodity M. For example, the exposure unit 1012 causes the camera having its light emitter presently emitting light to be active and capture an image of the commodity M.

Immediately after the completion of the image capture by a first one of the imaging units, the second light emission unit 1013 causes the light emitters of the other imaging units (more specifically, the others of the interfering subset) to emit light. For example, once the light emitter of one camera has finished emitting light and the activation of that camera is terminated (camera is de-activated), the light emitters of the other cameras immediately start to emit light.

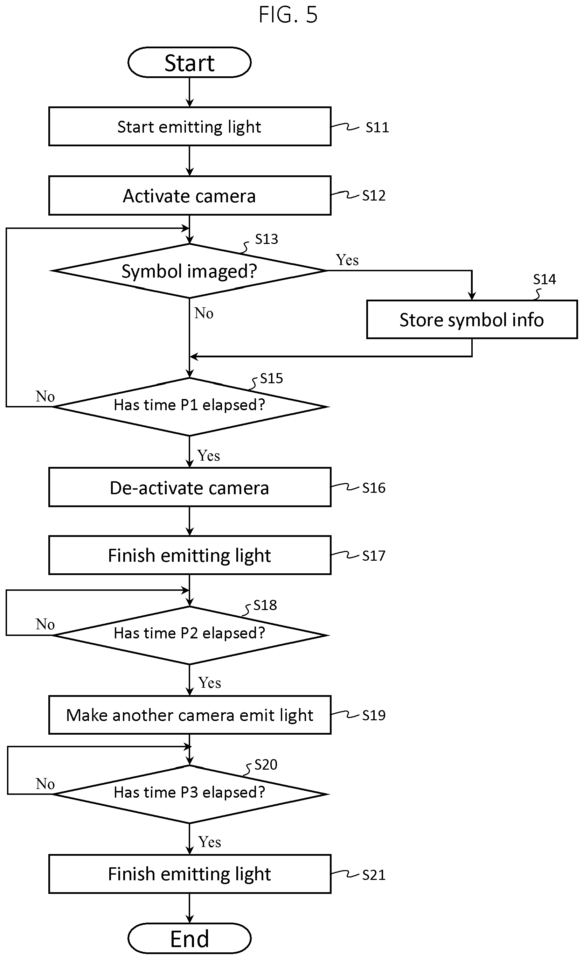

Hereinafter, the control process performed by the symbol reading device 1 will be described with reference to FIG. 5. FIG. 5 is a flowchart of the control process of the symbol reading device 1. As shown in FIG. 5, first, the symbol reading device 1 (or the control unit 100 via the controller 16 thereof as shown in FIG. 3) controls the first light emission unit 1011 to cause a light emitter (for example, the light emitter A1) provided in a camera (for example, the camera A) to emit light based on the information stored in the order table 142 (S11) . Next, the symbol reading device 1 controls the exposure unit 1012 to cause the corresponding camera to be activated in synchronization with the light emission of the light emitter by the first light emission unit 1011 to capture an image of the commodity M (S12) .

The control unit 100 determines whether there is an image of a symbol BK included in the image of the commodity M captured by the active camera (S13) . If the control unit 100 determines that an image of the symbol BK is included (Yes in S13), the control unit 100 stores specific information for identifying the symbol BK in the symbol information section 131 (S14) . When the specific information is stored in the symbol information section 131 or if the control unit 100 determines that an image of the symbol BK is not included or otherwise cannot be recognized (No in S13), the control unit 100 then determines whether a predetermined time P1 has elapsed since the activation of the camera (S15). If the control unit 100 determines that the predetermined time P1 has not elapsed (No in S15), the control unit 100 repeats the process from S13 to S15.

If the control unit 100 determines that the predetermined time P1 has elapsed (Yes in S15), the control unit 100 ends the exposure of the camera (S16) . Then, the control unit 100 ends the light emission of the light emitter of the camera that has finished the exposure (S17).

Next, the control unit 100 determines whether a predetermined time P2 measured by the timer 18 has been counted (S18) . The predetermined time P2 measured by the timer in S18 may be approximately 0 or a short time (for example, several milliseconds).

If the control unit 100 determines that the timer 18 has measured the predetermined time P2 (Yes in S18), the second light emission unit 1013 causes the light emitters of all other cameras than the camera which has completed the image capturing to emit light (S19).

The predetermined time P2 after a certain camera (for example, camera A) finishes its attempt to capture an image (exposure time) to when the light emitter of another camera starts to emit light may be approximately 0 or a very short time, and therefore, the control unit 100 causes the light emitters of other cameras to emit light after the imaging of the first camera (for example, camera A) is complete.

After this process, the control unit 100 further determines whether a predetermined time P3 has elapsed since the light emission of the other light emitters (S20). The control unit 100 remains in stand-by until the predetermined time P3 elapses (No in S20), and if the control unit 100 determines that the predetermined time P3 has elapsed (Yes in S20), it ends the light emission of the other light emitters (S21). The control unit 100 returns the process to S11, and starts the next state based on the order table 142.

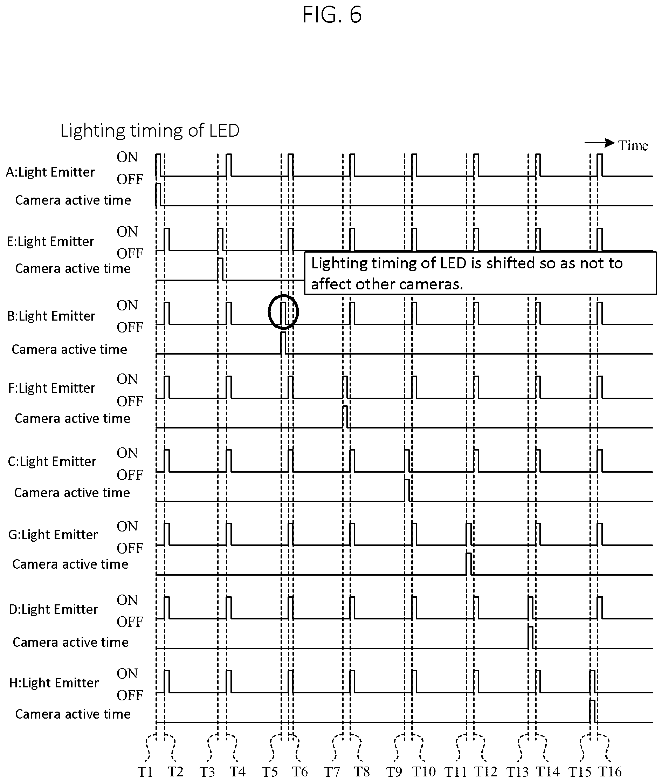

FIG. 6 is a timing chart of light emission of the light emitters and exposure of the cameras according to the control process by the symbol reading device 1 or the control unit 100 as described above with reference to FIG. 5. As illustrated in FIG. 6, for example, the control unit 100 causes the light emitter A1 to emit at a time T1 for a predetermined period of time and causes the camera A to be active for the same predetermined time period at the time T1. Then, the control unit 100 causes the light emitters B1 to H1 of the cameras B to H to emit light for a predetermined time period at a time T2 immediately after the completion of the emission of the light emitter A1 and the exposure of the camera A. At a time T3 when the light emission of the light emitters B1 to H1 ends and a predetermined time (for example, 20ms to 30ms) elapses, the control unit 100 causes the light emitter E1 of the camera E to emit for a predetermined period of time and causes the camera E to be active for the same predetermined period of time. Then, the control unit 100 causes the light emitters A1 to D1 and the light emitters F1 to H1 to emit light for a predetermined time period at a time T4 immediately after the completion of the emission of the light emitter E1 and the exposure of camera E.

Thereafter, in a similar manner, when the times T5, T7, T9, T11, T13, and T15 are reached respectively, the light emitter is caused to emit light for the corresponding camera and the camera is caused to be active. Then, when the times T6, T8, T10, T12, T14, and T16 are reached immediately after the above times are performed, the light emitters of the cameras other than the active camera start to emit light.

As described above, the control unit 100 of the symbol reading device 1 first causes the light emitter of one of the cameras (or the first camera) to emit light and causes that camera to be active. When the light emission of the light emitter and the exposure of the first camera are finished, the light emitters of all other cameras (or the second cameras) are caused to emit light immediately thereafter. By doing so, the light emitters of the second cameras do not emit light while the first camera is active, and thus the light emitted from the second cameras do not directly reach the active, first camera. In addition, since all light emitters appear to emit light at the same time to the human eye, it is possible to give a sense of reliability to the symbol reading device 1.

As described above, the symbol reading device 1 of the first embodiment includes the plurality of cameras A to H, each comprising the light emitter configured to emit light towards an article and configured to capture the image of the symbol BK attached to the article by the light emission of the light emitter. Further, the symbol reading device 1 includes the imaging control unit 101 that controls the plurality of interfering cameras, among the cameras A to H, arranged at the mutually interfering positions at which the light emitted by one or more light emitters interferes with other cameras (in other words, the light emission from one or more imaging units of the interfering subset degrades imaging performance of the other imaging units in the subset), such that the timing of the image capture by at least one of the interfering cameras in the interfering subset differs from the timings of the light emission of the other interfering cameras. Therefore, it is possible to prevent the function of the camera from being degraded by the light of the other cameras in the case where these cameras interfere with each other.

### Second Embodiment

Hereinafter, a second embodiment will be described. In the first embodiment as described above, the light emitters emit light one by one, and the cameras are sequentially activated one by one. However, the symbol reading device 1 of the first embodiment does not exclude a case where a camera not existing at an interfering position simultaneously emits light and is active at the same time as another camera or cameras at an interfering position. In the second embodiment, in addition to the above-described configuration and function of making the image capture timings and the light emission timings different from each other among the interfering cameras, the symbol reading device 1 may further make the light emission timings of the light emitters and exposure timings of the cameras of the imaging units arranged at non-interfering positions simultaneous with those timings of the cameras arranged at the interfering positions. In other words, the symbol reading device 1 may control the light emitters of the cameras that constitute the interfering subset of the plurality of imaging units which exist at the mutually interfering positions and the light emitters of cameras that constitute a non-interfering subset of the plurality of imaging units which are disposed at non-light interfering positions to emit light at the same time, and causes these cameras simultaneously to be active.

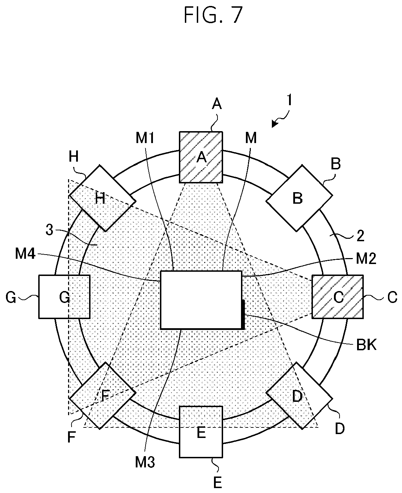

FIG. 7 is an explanatory diagram illustrating the symbol reading device 1 according to the second embodiment. In the first embodiment as shown in FIG. 1, the cameras arranged at the interfering positions with respect to the camera A are the cameras D, E, and F. In the second embodiment as shown in FIG. 7, the light emitted by the light emitter A1 of the camera A is not directly received by the camera C. Therefore, the camera C is not regarded as being disposed at the interfering position with respect to the camera A. Further, the light emitted by the light emitter C1 of the camera C is not directly received by the camera A. Therefore, the camera A is not regarded as being disposed at the interfering position with respect to the camera C. The camera A and the camera C are not interfering cameras with respect to each other. As a result, even if the light emitter A1 of the camera A and the light emitter C1 of the camera C emit light at the same time, and the camera A and the camera C are simultaneously active (attempting to acquire an image), the functions of these cameras are not degraded. Further, the cameras B, G, and H are also not at the interfering positions with respect to the camera A. The cameras B, G, and H are, therefore, not the interfering cameras for the camera A. Thus, the camera A and one of the cameras B, G, and H may simultaneously emit light and be active.

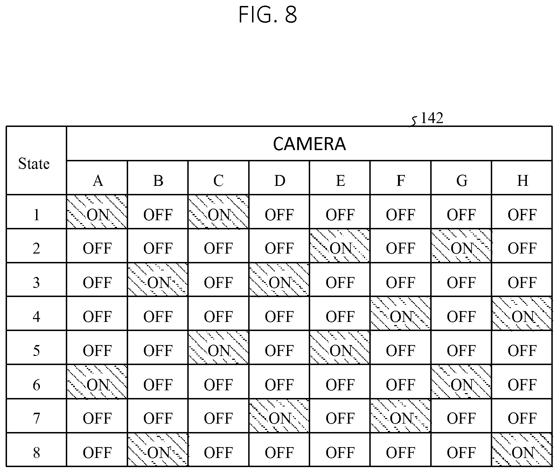

In the second embodiment, the light emitters of the cameras A to H emit light in a time-division manner in the manner defined by the order table 142 as illustrated in FIG. 8. Furthermore, the cameras A to H are active (e.g., has a shutter opened for exposure) only during the time the respective light emitter emits light and attempts to read the symbol BK attached to the commodity M only when active. In one embodiment, the light emission time from the light emitter of a camera may be longer than the active time of the camera.

As illustrated in FIG. 8, first, as State 1, the light emitter A1 and the light emitter C1 simultaneously emit light for a predetermined time period, and the camera A and the camera C are simultaneously active for the same time period to capture images of the commodity M. Upon the completion of State 1, the light emission of the light emitters A1 and C1 and the exposure of the cameras A and C terminate. Then, at State 2, the light emitter E1 of the camera E and the light emitter G1 of the camera G simultaneously emit light for a predetermined time period, and the camera E and the camera G are simultaneously activated for the same time period to capture images of the commodity M. In this way, two cameras are simultaneously driven for the light emission and the exposure in the following orders of a pair of cameras: Cameras A and C; Cameras E and G; Cameras B and D; Cameras F and H; Cameras C and E; Cameras G and A; Cameras D and F; and finally Cameras H and B.

The first light emission unit 1011 causes, among the light emitters A1 to H1, the light emitter of one of the plurality of cameras disposed at the interfering positions and the light emitter of one of the plurality of cameras disposed at non-interfering positions to emit light at the same time.

The exposure unit 1012 then causes an above-listed pair of two cameras to be simultaneously active in synchronization with the light emission of the light emitters by the first light emission unit 1011.

Immediately after the image capturing by the two cameras is complete, the second light emission unit 1013 causes the light emitters of all other imaging units (cameras) other than the first two cameras to emit light.

In the second embodiment, the first light emission unit 1011 causes, among the light emitters A1 to H1, the light emitter of one of the interfering cameras disposed at the interfering positions and the light emitter of one of the cameras disposed at the non-interfering positions to emit light at the same time in S11 in the flowchart of FIG. 5. In S12, the exposure unit 1012 causes the two cameras to be simultaneously active in synchronization with the light emitter of the first light emission unit 1011, thereby capturing images of the commodity M. At S19, immediately after the completion of the image capturing by the two cameras, the second light emission unit 1013 causes the light emitters of all other imaging units than the two cameras to emit light.

In addition to the above-described configuration and function, the symbol reading device 1 of the second embodiment has a similar configuration and similar functions as that of the symbol reading device 1 of the first embodiment. The second embodiment is capable of achieving the same effect as or a substantially similar effect to that achieved by the symbol reading device 1 of the first embodiment. That is, the prevention of the imaging of the cameras from being degraded by the light from other possibly interfering cameras.

For example, in the first embodiment, the light emission of the light emitter and the activation of the camera are performed in the order of Camera A, Camera E, Camera B, Camera F, Camera C, Camera G, Camera D, and Camera H. However, the present disclosure is not limited thereto. For example, the order of the cameras that perform the light emission and the exposure may be arbitrarily set.

Further, in the second embodiment, a light emitter of one of the plurality of interfering cameras arranged at positions interfering with each other and a light emitter of one of the plurality of cameras arranged at non-interfering positions are controlled to simultaneously emit light and are controlled to be simultaneously active. However, the present disclosure is not limited thereto. For example, a light emitter of one of the interfering cameras and light emitters of two or more of the non-interfering cameras may be controlled to emit light at the same time. In this case, the light emitters of the two or more cameras that are not the interfering cameras can be active.

In the present embodiments, the description has been made using the symbol reading device 1 in which the plurality of cameras are arranged in the ring-shaped support member 2. However, the present invention is not limited thereto. For example, the support member 2 may have a shape other than the ring shape such as a U-shape, where the commodity M is moved from an first side of the U-shape through the hollow portion 3 by a belt conveyor or manually by operator's hands.

In the present embodiments, the commodity M has been described as an example of an article to be imaged. However, the present disclosure is not limited thereto. The article may be something other than a commodity M. For example, the symbol BK attached to any article, item, product, container, or the like being shipped out from a warehouse or being placed in the warehouse. As such, the symbol reading device 1 of the present disclosure may be adopted to such an application.

In the embodiments as described above, a camera for capturing an image of a symbol is used as an example of the imaging unit. However, the present disclosure is not limited thereto. The imaging unit may be, for example, a scanner configured to optically read a symbol on the commodity M or the like.

The programs executed by the symbol reading device 1 or the CPU 11 (processor) of the control unit 100 according to the embodiments can be provided by being recorded in a non-transitory computer-readable medium such as a CD-ROM, a flexible disk (FD), a CD-R, and a digital versatile disc (DVD) in a file in an installable format or in an executable format.

Alternatively, such programs may be stored in a computer connected to a network such as the internet and may be provided by being downloaded via the network. In further alternative embodiments, the programs may be provided or distributed via a network such as the Internet.

In still further embodiments, the control program and other various programs to be executed by the CPU or processor of the symbol reading device 1 may be provided by being incorporated in a ROM or the like in advance.

While certain embodiments have been described, these embodiments have been presented by way of example only and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the appended claims. The accompanying claims and their equivalents are intended to cover such forms or modifications as would fall within the scope of the inventions.

## Claims

1. A symbol reading device, comprising:
a plurality of imaging units disposed at a plurality of positions to image an article, each imaging unit comprising a light emitter configured to emit light towards the article, an interfering subset of the plurality of imaging units being at mutually interfering positions at which light emission from imaging units of the subset degrades imaging performance of the other imaging units in the subset; and
a processor configured to control the interfering subset such that a timing for image capture by at least one of the interfering subset differs from timings of light emission by the others of the rest of the interfering subset.

2. The symbol reading device according to claim 1, wherein the processor is further configured to control the plurality of imaging units to emit light one by one in order.

3. The symbol reading device according to claim 1 or 2, wherein the processor is further configured to control the plurality of imaging units to emit light one by one at predetermined intervals.

4. The symbol reading device according to claim 2 or 3, further comprising a memory configured to store an order table defining a predetermined order of the light emission timings of the imaging units.

5. The symbol reading device according to any of claims 1 to 4, wherein the processor is further configured to control the interfering subset and non-interfering subset of the plurality of imaging units to simultaneously emit light.

6. The symbol reading device according to claim 5, wherein the imaging units of the non-interfering subset are at non-light interfering positions.

7. The symbol reading device according to claim 5 or 6, wherein the processor is further configured to:
control pairs of the interfering subset and the non-interfering subset to simultaneously emit light such that the light emission of the respective pairs is in a sequence order.

8. The symbol reading device according to any of claims 1 to 7, wherein the processor is further configured to control the light emitters of the others of the rest of the interfering subset to emit light immediately after completion of the image capture by the at least one of the interfering subset.

9. The symbol reading device according to any of claims 1 to 8, wherein the processor is further configured to control the light emitters of the imaging units to emit light for a predetermined period of time and control the imaging units to be active for the same predetermined period of time.

10. A non-transitory computer-readable medium storing a program therein, which when executed, causes a computer to perform a process for capturing an image of a symbol attached to an article upon light emission from a plurality of imaging units of a symbol reading device, the process comprising:
controlling an interfering subset of the plurality of imaging units, which are at mutually interfering positions at which light emission from imaging units of the subset degrades imaging performance of the other imaging units in the subset, such that a timing for image capture by at least one of the interfering subset differs from timings of light emission by the others of the rest of the interfering subset.

11. The non-transitory computer-readable medium according to claim 10, wherein the process further comprises controlling the plurality of imaging units to emit light one by one in order.

12. The non-transitory computer-readable medium according to claim 10 or 11, wherein the process further comprises controlling the plurality of imaging units to emit light one by one at predetermined intervals.

13. The symbol reading device according to any of claims 1 to 9, wherein the processor is configured to control the at least one of the interfering subset and a non-interfering subset to simultaneously emit light.

14. The symbol reading device according to claim 13, wherein the processor is further configured to control the plurality of imaging units to emit light one by one at predetermined intervals and in a predetermined order.

15. The symbol reading device according to claim 13 or 14, wherein the processor is further configured to control pairs of the interfering subset and the non-interfering subset to simultaneously emit light such that the light emission of the respective pairs is in a sequence order.
